# EUROPEAN PATENT APPLICATION

(11) **EP 4 651 008 A1**
(43) Date of publication of application: **19.11.2025**
(21) Application number: 25175557.5
(22) Date of filing: 09.05.2025
(51) Int. Cl.: G06F 30/15, G06F 3/14, G06F 30/31, G06F 113/16

(54) **DISPLAY CONTROL METHOD AND DISPLAY CONTROL SYSTEM**

(30) Priority: 17.05.2024 JP 2024080664
(71) Applicant: Yanmar Holdings Co., Ltd., Osaka (JP)
(72) Inventor: SHIMOKADO, Shigeki, Amagasaki (JP); NAGASE, Masayuki, Amagasaki (JP)
(74) Representative: Sekiguchi, Kazuya

(57) **Abstract**

[Problem] To provide a display control method and a display control system for easily improving work efficiency.

[Solution] The display control method includes displaying first data D1 and second data D2 on the same display screen G1. The first data D1 and the second data D2 each represent a circuit and are associated with each other. The first data D1 and the second data D2 have different display modes.

## Description

### TECHNICAL FIELD

The present invention relates to a display control method and a display control system for displaying a circuit configuration, such as a routing state of a wire harness, on a display screen.

### BACKGROUND ART

As a related art, for example, there is known a display control method (a control method of a routing path display device) that is used during routing work, which is the work of routing a wire harness in a vehicle such as a railroad vehicle, and that displays a routing path of the wire harness in the vehicle (for example, see Patent Document 1). In the display control method according to the related art, a frame arranged between a routing start end and a routing terminal end of a routing target article is displayed on a display screen, and a wire harness is displayed on the display screen in correspondence with a harness ID having a predetermined positional relationship with the frame and indicating a routing order.

Herein, the frame is generated based on three-dimensional CAD data read from a three-dimensional CAD data storage unit, and is three-dimensionally displayed on the display screen. Three-dimensional display refers to displaying an object, such as a frame represented by three-dimensional coordinates like three-dimensional CAD data, on a two-dimensional plane like a display screen. Further, instead of the three-dimensional display image of the frame, the routing path of the wire harness can be displayed on the display screen.

### PRIOR ART DOCUMENT

### PATENT DOCUMENT

Patent Document 1: Japanese Unexamined Patent Publication No. 2017-157561

### SUMMARY OF INVENTION

### TECHNICAL PROBLEM

In the configuration of the related art described above, it is necessary to compare the three-dimensional display image of the frame with the routing path of the wire harness by switching the display screen, and it is difficult to compare the two, which may lead to a decrease in work efficiency of the routing work or the like using the display screen.

An object of the present invention is to provide a display control method and a display control system that can easily improve work efficiency work efficiency.

### SOLUTION TO PROBLEM

A display control method according to one aspect of the present invention includes displaying, on the same display screen, first data and second data, both of which represent a circuit and are associated with each other. A display mode is different between the first data and the second data.

A control program for a work vehicle according to one aspect of the present invention is a program for causing one or more processors to execute a control method of the work vehicle.

A display control system according to an aspect of the present disclosure includes a display control unit. The display control unit displays, on the same display screen, the first data and the second data, both of which represent a circuit and are associated with each other. The display control unit makes a display mode different between the first data and the second data.

### ADVANTAGEOUS EFFECTS OF INVENTION

According to the present invention, it is possible to provide a display control method and a display control system that can easily improve work efficiency.

### BRIEF DESCRIPTION OF DRAWINGS

FIG. 1 is a schematic diagram illustrating a configuration of a display control system according to a first embodiment.
FIG. 2 is a schematic side view illustrating an external appearance of a work vehicle in which the display control system according to the first embodiment is used.
FIG. 3 is a schematic block diagram of the display control system according to the first embodiment.
FIG. 4 is a view illustrating one example of a display screen displayed in the display control system according to the first embodiment.
FIG. 5 is a diagram illustrating one example of an operation region of a display screen displayed in the operation display control system according to the first embodiment.
FIG. 6 is a view illustrating one example of a display screen displayed in the display control system according to the first embodiment.
FIG. 7 is an enlarged view of a region Z1 in FIG. 6, illustrating one example of a display screen displayed in the display control system according to the first embodiment.
FIG. 8 is an enlarged view of a region Z2 in FIG. 6, illustrating one example of a display screen displayed by the operation display control system according to the first embodiment.
FIG. 9 is a diagram illustrating one example of related data used in the display control system according to the first embodiment.
FIG. 10 is a view illustrating one example of a display screen displayed in the display control system according to the first embodiment.
FIG. 11 is a diagram illustrating a specific example of related data used in the display control system according to the first embodiment.
FIG. 12 is a diagram illustrating a specific example of related data used in the display control system according to the first embodiment.

### DESCRIPTION OF EMBODIMENTS

An embodiment of the present invention will be described below with reference to the accompanying drawings. The following embodiment is an example that embodies the present invention, and does not intend to limit the technical scope of the present invention.

### (First Embodiment)

### [1] Overview

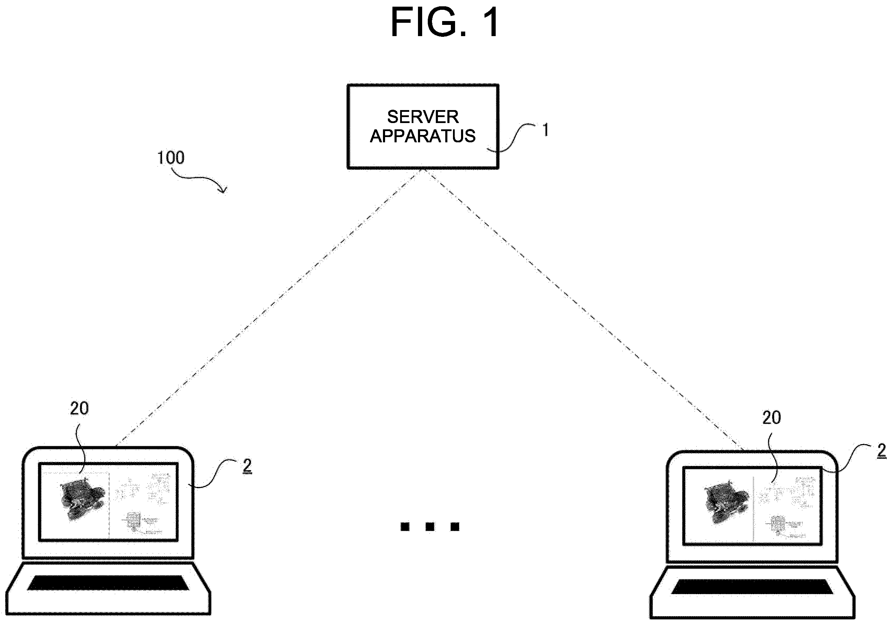

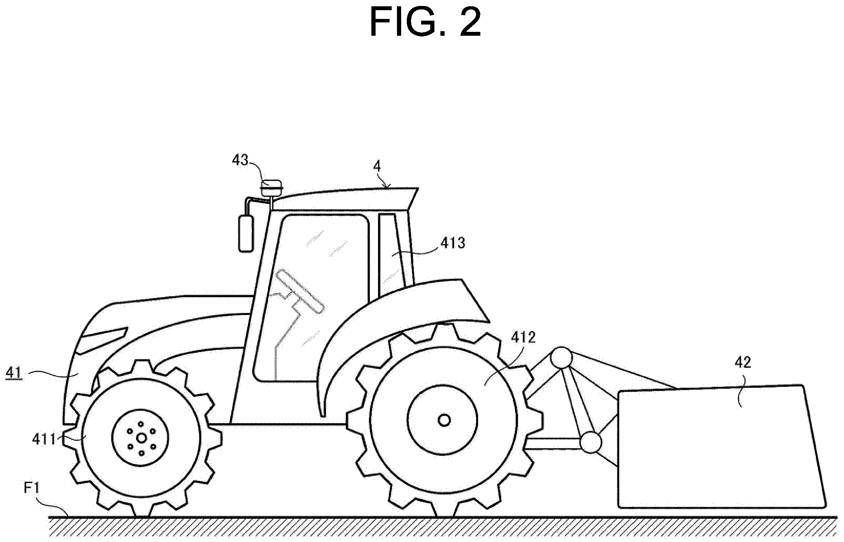

First, an overview of a display control system 100 according to the present embodiment will be described with reference to FIGS. 1 and 2. The display control system 100 according to the present embodiment is used for visualization of a circuit (an electric circuit) using a harness or the like included in a work vehicle 4 (see FIG. 2).

In the present embodiment, the display control system 100 includes a server apparatus 1 and one or more user terminals 2. The server apparatus 1 and the user terminal 2 are communicable with each other. The term "communicable" in the present disclosure means that information can be transmitted and received directly or indirectly via a communication network (network), a relay, or the like by an appropriate communication method such as wired communication or wireless communication (communication using a radio wave or light as a medium). The communication network includes, for example, the Internet, a local area network (LAN), a wide area network (WAN), a public telephone line, a mobile phone line network, a packet line network, a wireless LAN, and the like.

The work vehicle 4 performs some work in a target region F1 (see FIG. 2) by a work machine 42 while moving in the target region F1. The term "work" in the present disclosure is work performed on the target region F1 by the work machine 42, and includes, for example, various types of agricultural work such as tilling, leveling, seeding, fertilizing, spraying of agrochemicals, planting (rice planting), or harvesting, and various types of work such as construction work.

The work machine 42 performs work in the target region F1 when a machine body 41 of the work vehicle 4 moves in the target region F1. The work machine 42 is, for example, a tiller such as a rotary tiller or a plow that performs tilling work. The work machine 42 of this type includes a direct-mounted work machine directly attached to a three point link and a towing work machine towed by the machine body 41. In the present embodiment, the work machine 42 is included in components of the work vehicle 4, but the work machine 42 may not be included in the components of the work vehicle 4 because the work machine 42 is detachable from the machine body 41.

The term "work vehicle" in the present disclosure means, for example, a vehicle that performs various types of work in the target region F1 such as a field, and examples thereof include agricultural machines such as a tractor, a seeder, a rice planter, a spreader, a sprayer, a transplanter, and a harvester. The work vehicle 4 may be, for example, a construction machine or the like. In the present embodiment, unless otherwise specified, a case where the work vehicle 4 is a tractor will be described as an example.

The machine body 41 includes steered wheels 411 including a pair of right and left front wheels and drive wheels 412 including a pair of right and left rear wheels, and travels in the target region F1 by these four wheels (the pair of steered wheels 411 and the pair of drive wheels 412).

Further, it is assumed that the work vehicle 4 is an automatic machine that can run by automatic traveling (autonomous traveling or the like) even though a person (an operator) can board the work vehicle. However, the present embodiment is not limited thereto, and the work vehicle 4 may be an unmanned machine that automatically travels, or may run by an operation (including a remote operation) of a person (an operator).

The term "target region" in the present disclosure is a region in which the work vehicle 4 performs, for example, various types of work such as tilling, leveling, seeding, fertilizing, spraying of agrochemicals, planting (rice planting), or harvesting while moving, and includes a paddy field, a farm, an orchard, a pasture, and the like. For example, when a paddy field or a farm in which crops (agricultural products) such as rice, wheat, soybeans, or buckwheat are grown is the target region F1, the crops grown in the target region F1 are agricultural products. Furthermore, when garden plants are grown in a garden plant farm, the garden plant farm is the target region F1, and when trees to be used as wood are grown in a forest, as in forestry, the forest is the target region F1. In this case, the crops grown in the target region F1 are garden plants, trees, or the like. As an example, the work vehicle 4 is used for agricultural work in a field (target region F1), and the target region F1 is a paddy field for growing rice. Moreover, the target region F1 is not limited to a field. For example, when the work vehicle 4 is a construction machine, a site where the construction machine performs work is the target region F1.

Moreover, the term "automatic traveling" in the present disclosure includes "autonomous traveling" in which the work vehicle 4 autonomously travels without depending on an operation of an operator, and "semi-automatic traveling" in which only steering is automated, such as straight-travel assist. The "autonomous traveling" is, for example, a traveling mode in which a vehicle speed and the like are automatically controlled in addition to the automatic steering of the steered wheels 411 such that the work vehicle 4 travels along a target route. The "straight-travel assist" is, for example, a traveling mode in which only the automatic steering of the steered wheels 411 is performed and the vehicle speed and the like are controlled by the operation of the operator such that the work vehicle 4 travels along a straight target route parallel to a straight line (reference line) serving as a reference. That is, in the "semi-automatic traveling", although the work vehicle 4 cannot travel without the operation of the operator, burden on the operator for steering is reduced, and the work vehicle 4 can travel along the target route such as a straight route, which leads to an improvement in work efficiency.

In automatic traveling, the steered wheels 411 are automatically steered by a motor. That is, the automatic steering is achieved by changing directions of the steered wheels 411 by the output of the motor, instead of the operator operating a steering handle.

The work vehicle 4 includes an antenna unit 43 and the like in addition to the machine body 41 and the work machine 42. The antenna unit 43 includes a measurement device, a positioning device, and the like.

The machine body 41 has a driving unit 413 on which a person (operator) can board. A steering handle, a shift lever, an operation device, and the like are arranged in the driving unit 413. The steering handle, the shift lever, the operation device, and the like are operation units operated by the operator. Therefore, the work vehicle 4 is configured to be capable of not only automatically travel but also manually travel by a manual operation of the operator.

The machine body 41 causes the work vehicle 4 to travel by driving drive wheels 412 including (a pair of left and right) rear wheels. The machine body 41 includes a speed change device, and transmits power generated by the power source to the drive wheels 412 via the speed change device, thereby moving the machine body 41 forward or backward. Further, the machine body 41 steers steered wheels 411 including (a pair of right and left) front wheels.

The measurement device is a device that is mounted on the machine body 41 of the work vehicle 4 and measures an inclination angle of the work vehicle 4 with respect to a reference posture. Specifically, the measurement device is built in the antenna unit 43 arranged on the roof of the driving unit 413. The measurement device is, for example, an inertial measurement unit (IMU) that includes an angular velocity sensor (gyro sensor) for three axes orthogonal to each other, an acceleration sensor for three axes orthogonal to each other, and the like, and measures a posture and the like of the work vehicle 4. The measurement device 14 is capable of detecting three-dimensional inertial motion (rotational motion and translational motion in directions of three axes orthogonal to each other). The measurement device 14 measures rotation angles (inclination angles) around the three axes due to the rotational motion by using the angular velocity sensor, and measures accelerations of the three axes due to the translational motion by using the acceleration sensor.

The positioning device obtains a current position (latitude, longitude, altitude, and the like) of the machine body 41. Specifically, the positioning device is built in, for example, the antenna unit 43 arranged on the roof of the driving unit 413. Specifically, the positioning device calculates the current position (latitude and longitude) of the machine body 41 using a satellite positioning system such as the Global Navigation Satellite System (GNSS). That is, the positioning device has a positioning antenna for receiving positioning signals from a plurality of satellites, and calculates the current position on the basis of the positioning signals.

In addition to the above-described configuration, the work vehicle 4 further includes a detection device, a control device, a battery, a display device, various sensors, and the like. For example, the battery supplies electric power for running to respective parts of the work vehicle 4 such as the control device. In particular, electronic devices such as a control device, a measurement device, a positioning device, a detection device, and a communication device run using power supply from a battery, and thus can run even when a power source is stopped. The display device is a user interface for presenting information to a user (an operator), such as a liquid-crystal display or an organic EL display that displays various kinds of information.

The detection device detects an obstacle in a detection area. The detection device includes an obstacle sensor and a detection processing unit. The obstacle sensor may include various sensors such as a camera (image sensor), a sonar sensor, a human detecting sensor, a radar, or a light detection and ranging (LiDAR).

A detection result of the detection device is output to the control device. When the detection device detects an obstacle at least while the work vehicle 4 is automatically traveling, the control device outputs an alarm (including notification by sound and/or light), and executes obstacle avoidance processing (including detouring, deceleration, stopping, or the like) by controlling the machine body 41.

The control device mainly includes a computer system having one or more processors, such as a central processing unit (CPU), and one or more memories, such as a read only memory (ROM) and a random access memory (RAM), and executes various processes (information processing). The control device is an integrated controller that performs overall control of the work vehicle 4 and includes an electronic control unit (ECU), for example.

The control device is configured to be able to communicate with devices provided in respective parts of the machine body 41. That is, the antenna unit 43 (the measurement device and the positioning device), the display device, the detection device, and the like are electrically connected to the control device. Accordingly, the control device can acquire outputs of the measurement device, the positioning device, the detection device, and the like. The control device may transmit and receive various kinds of information (data) directly to and from the respective devices or indirectly via a relay or the like.

In this type of work vehicle 4, for example, the antenna unit 43 (a measurement device and a positioning device), a display device, a detection device, and the like are electrically connected to the control device to form an electric circuit. The connection between the devices (the control device, the antenna unit 43 (the measurement device and the positioning device), the display device, the detection device, etc.) is achieved using a harness. In other words, the work vehicle 4 includes a circuit (electric circuit) using the harness. However, the harness is routed through a portion that cannot be visually recognized from the outside of the machine body 41, such as an inner side of an outer plate of the machine body 41. In addition, which harness is connected to which device cannot be determined from the appearance in some cases. In particular, when the number of devices mounted on the machine body 41 increases, a circuit (electric circuit) also becomes complicated. Therefore, it is difficult to grasp the entire circuit from the appearance.

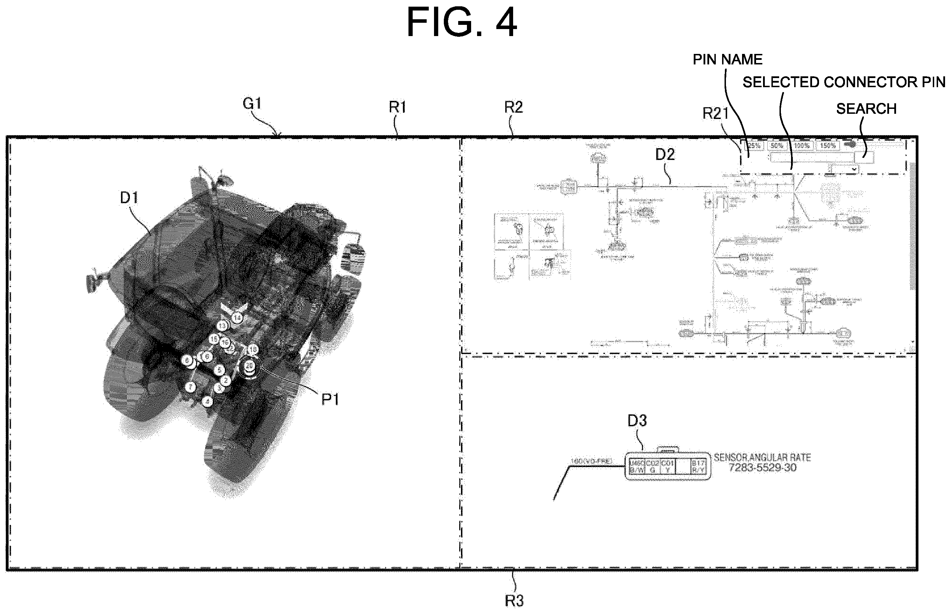

Therefore, the display control system 100 for visualizing a circuit (electric circuit) is used for maintenance (including inspection, repair, etc.) and the like of this type of work vehicle 4. The display control system 100 displays a display screen G1 (see FIG. 4) graphically illustrating a circuit (electric circuit) of the work vehicle 4 to a worker who performs maintenance work. Accordingly, the worker can perform the maintenance work on the display screen G1, for example, while confirming a portion to be inspected or repaired on the display screen G1.

Therefore, the display screen G1 is displayed, for example, on a display unit 20 (see FIG. 1) of the user terminal 2 used by a user such as a worker. Accordingly, a user such as a worker who performs maintenance work of the work vehicle 4 can confirm, for example, a portion to be inspected or repaired, on the display screen G1 displayed on the display unit 20 of the user terminal 2.

In the display control system 100 according to the present embodiment, a general-purpose terminal such as a laptop computer, a tablet terminal, or a smartphone is used as the user terminal 2. Dedicated application software (program) is installed in the user terminal 2 which is a general-purpose terminal, and the user terminal 2 functions as the user terminal 2 of the display control system 100 by activating the application software.

The user terminal 2 includes a display unit 20 and an operation unit. The display unit 20 includes, for example, a liquid-crystal display or an organic EL display. The operation unit includes, for example, a touch panel, a physical switch, a mouse, a keyboard, or the like. When the operation unit is operated in a state where the display screen G1 is displayed on the display unit 20, the user terminal 2 can receive a user operation on the display screen.

Herein, the server apparatus 1 can display various kinds of information on the display unit 20 of the user terminal 2 in response to an operation of the user terminal 2 by the user. **In** addition, the server apparatus 1 can receive an operation input to the user terminal 2 by the user.

Specifically, in the present embodiment, a client-server system is configured by the server apparatus 1 and the user terminal 2 (client terminal), and the server apparatus 1 performs various processes such as display in response to a user operation of the user terminal 2. Therefore, in the present embodiment, it is assumed that "display", "operation", and the like, which will be described below, are performed by using the user terminal 2.

Similar display and operation may be performed by the server apparatus 1.

The user terminal 2 acquires various kinds of data from the server apparatus 1 by executing various processes according to the browser software, and displays, for example, the display screen G1 on the display unit 20.

### [2] Configuration of Display Control System

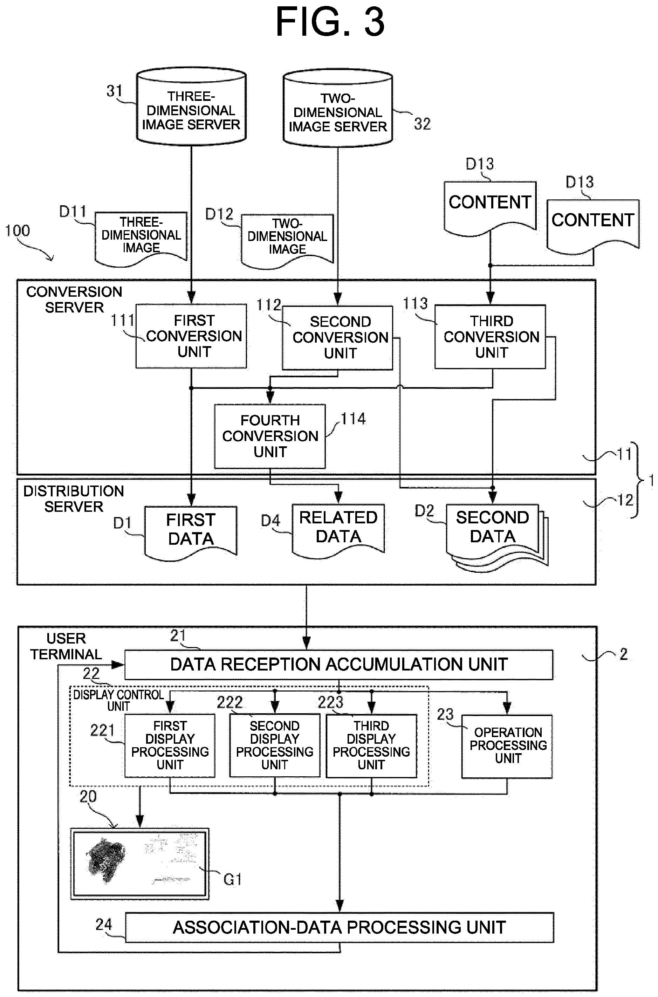

Next, a configuration of the display control system 100 according to the present embodiment will be described in detail with reference to FIG. 3.

In the present embodiment, the display control system 100 includes the server apparatus 1 and the user terminal 2 as described above, and displays the display screen G1 on the display unit 20 of the user terminal 2. The server apparatus 1 and the user terminal 2 can communicate with each other via a communication network such as the Internet.

The server apparatus 1 includes a conversion server 11 and a distribution server 12. The conversion server 11 and the distribution server 12 are connected to each other. Further, a three-dimensional image server 31 and a two-dimensional image server 32 are connected to the conversion server 11. The distribution server 12 is connected to the user terminal 2 via a communication network.

The conversion server 11 includes a first conversion unit 111, a second conversion unit 112, a third conversion unit 113, and a fourth conversion unit 114. The conversion server 11 mainly includes a computer system including one or more processors such as a CPU, and one or more memories such as a ROM and a RAM, and achieves functions of the first conversion unit 111, the second conversion unit 112, the third conversion unit 113, and the fourth conversion unit 114.

The first conversion unit 111 converts a three-dimensional image (3D CAD) file D11 stored in the three-dimensional image server 31 into first data D1. The three-dimensional image file D11 is three-dimensional model data of the work vehicle 4, and includes at least a model representing the machine body 41 and a circuit such as a harness routed in the machine body 41. The first data D1 is data for three-dimensional display, which is obtained by converting the three-dimensional image file D11 into a format displayable on the display screen G1. The generated first data D1 is stored in the distribution server 12.

The second conversion unit 112 converts a two-dimensional image (2D CAD) file D12 stored in the two-dimensional image server 32 into second data D2. Herein, the two-dimensional image file D12 is wiring data of the circuit (electrical circuit) of the work vehicle 4, and represents at least a circuit such as a harness routed in the machine body 41. The second data D2 is data for two-dimensional display, which is obtained by converting the two-dimensional image file D12 into a format displayable on the display screen G1. The generated second data D2 is stored in the distribution server 12.

The third conversion unit 113 takes in contents D13 for production for production of the display screen G1 and generates the first data D1 and the second data D2.

The fourth conversion unit 114 generates related data D4 for relating the first data D1 converted by the first conversion unit 111 to the second data D2 converted by the second conversion unit 112. The related data D4 is data that relates (associates) the first data D1 and the second data D2 for each part. The generated related data D4 is stored in the distribution server 12.

The user terminal 2 includes a data reception accumulation unit 21, a display control unit 22, an operation processing unit 23, and an association-data processing unit 24. The user terminal 2 mainly includes a computer system including one or more processors such as a CPU and one or more memories such as a ROM and a RAM, and achieves functions of the data reception accumulation unit 21, the display control unit 22, the operation processing unit 23, the association-data processing unit 24, and the like by executing a program.

The data reception accumulation unit 21 receives various kinds of data from the distribution server 12 and accumulates (saves) the data. To be specific, the user terminal 2 communicates with the distribution server 12, downloads the first data D1, the second data D2, and the related data D4 stored in the distribution server 12, and accumulates them in the data reception accumulation unit 21.

Even in an offline state in which the communication between the user terminal 2 and the distribution server 12 is interrupted in a state in which the first data D1, the second data D2, and the related data D4 are saved (stored) in the data reception accumulation unit 21, the user terminal 2 can execute processing using the first data D1, the second data D2, and the related data D4.

The display control unit 22 generates a display screen G1 by using the first data D1, the second data D2, and the related data D4, and causes the display unit 20 to display the display screen G1. That is, the display control unit 22 generates the display screen G1 by using the first data D1, the second data D2, and the related data D4 received (and accumulated) by the data reception accumulation unit 21.

The operation processing unit 23 aggregates user operations on the display screen G1. To be specific, the operation processing unit 23 aggregates user operations performed on the operation unit in a state where the display screen G1 is displayed on the display unit 20. The operation processing unit 23 outputs operation information related to the user operation.

The association-data processing unit 24 updates the display screen G1 on the basis of the operation information related to the user operations aggregated by the operation processing unit 23 and the related data D4.

### [3] Display Control Method

Next, an example of a display control method to be executed mainly by the display control system 100 will be described with reference to FIGS. 4 to 12.

Since the display control method according to the present embodiment is executed by the display control system 100 having a computer system as a main component, in other words, the display control method is embodied by a display control program. That is, the display control program according to the present embodiment is a computer program for causing one or more processors to execute each process related to the display control method.

Herein, the display control system 100 executes various processes to be described below related to the display control method when a specific start operation set in advance for causing the display control program to be executed is performed. The start operation is, for example, an activation operation of an application program (display control program) in the user terminal 2, a login operation in the user terminal 2, or the like. On the other hand, the display control system 100 ends the various processes to be described below related to the display control method when a specific end operation set in advance is performed. The end operation is, for example, an end operation of the application program (display control program) in the user terminal 2, or the like.

### [3.1] Display Screen

Herein, first, a configuration of the display screen G1 displayed on the display unit 20 of the user terminal 2 by the display control method according to the present embodiment will be described. In the drawings, such as FIG. 4, illustrating the display screen G1 displayed on the display unit 20 of the user terminal 2, all of the alternate long and short dash lines, the leader lines, and the reference numerals representing regions are merely given for description, and are not actually displayed on the display unit 20.

The display screen G1 illustrated in FIG. 4 is a screen for visualizing a circuit (electric circuit) included in the work vehicle 4. The display screen G1 includes a first region R1, a second region R2, and a third region R3. In the present embodiment, as an example, since the display screen G1 is displayed in a "horizontally long" display region that is long in the horizontal direction in the display unit 20 of the user terminal 2, the display screen G1 is a "horizontally long" screen that is long in the horizontal direction.

To be specific, the display screen G1 is divided into two regions in the horizontal direction (right-left direction). The right region is further divided into two regions in the vertical direction (up-down direction). Thus, the display screen G1 is divided into a total of three regions. The left region is the first region R1, the upper right region thereof is the second region R2, and the lower right region thereof is the third region R3. In the present embodiment, as an example, the display screen G1 is substantially equally divided into two in the horizontal direction and also substantially equally divided into two in the vertical direction. Therefore, the first region R1 and the second region R2 (or the third region R3) have substantially the same size in the horizontal direction, and the second region R2 and the third region R3 have substantially the same size in the vertical direction. Therefore, the first region R1 is substantially twice as wide as the second region R2 (or the third region R3), and the first region R1 is the widest among the three regions.

However, the arrangement and size of each of these regions are merely an example, and can be changed as appropriate. Each region may be clearly divided by a boundary line or may not be clearly divided. For example, in the example of FIG. 4 or the like, although there is no boundary line between the first region R1, the second region R2, and the third region R3, for example, the first region R1, the second region R2, and the third region R3 may be clearly divided by the boundary line.

The first region R1 is a rectangular region that is slightly long in the horizontal direction. In the first region R1, the first data D1, which is data for three-dimensional display, is displayed. As described above, the first data D1 is the three-dimensional model data of the work vehicle 4, and is generated based on the three-dimensional image file D11 representing at least the machine body 41 and a circuit such as a harness routed in the machine body 41. The first data D1 is a three-dimensional model representing the machine body 41 and a circuit such as a harness routed in the machine body 41. Herein, the first data D1 is three-dimensionally displayed in the first region R1.

The term "three-dimensional display" in the present disclosure refers to displaying an object represented by three-dimensional coordinates, such as three-dimensional CAD data, on a two-dimensional plane, such as the display screen G1. More specifically, the first data D1 composed of an object imitating the machine body 41 and a circuit such as a harness routed in the machine body 41 is three-dimensionally displayed in the first region R1.

Further, the first data D1 displayed in the first region R1 supports an operation such as rotation of the coordinate axes in addition to an operation such as enlargement/reduction. To be specific, for example, it is possible to enlarge or reduce the first data D1 in the first region R1 by operating a mouse wheel on the first region R1 using an operation unit composed of a pointing device such as a mouse. Further, it is possible to tilt or rotate the first data D1 in the first region R1 by performing a drag operation on the first region R1 using an operation unit composed of a pointing device such as a mouse.

Further, in the first data D1 displayed in the first region R1, the machine body 41 is displayed as a semi-transparent skeleton in such a way that a harness or the like routed inside the outer plate of the machine body 41 can be seen. As a result, the routing of the harness or the like constituting the circuit (electric circuit) is visualized in the first data D1 displayed in the first region R1.

The second region R2 is a rectangular region that is long in the horizontal direction. In the second region R2, the second data D2, which is data for two-dimensional display, is displayed. As described above, the second data D2 is wiring data of a circuit (electric circuit) of the work vehicle 4, and is generated based on at least the two-dimensional image file D12 representing a circuit such as a harness routed in the machine body 41. The second data D2 is a circuit diagram (wiring diagram) illustrating a circuit such as a harness routed in the machine body 41. Herein, the second data D2 is two-dimensionally displayed in the second region R2.

The term "two-dimensional display" in the present disclosure refers to displaying an object represented by two-dimensional coordinates, such as a two-dimensional CAD data, on a two-dimensional plane, such as the display screen G1, i.e., general display. More specifically, the second data D2 composed of an object (a circuit diagram) imitating a circuit such as a harness routed in the machine body 41 is two-dimensionally displayed in the second region R2.

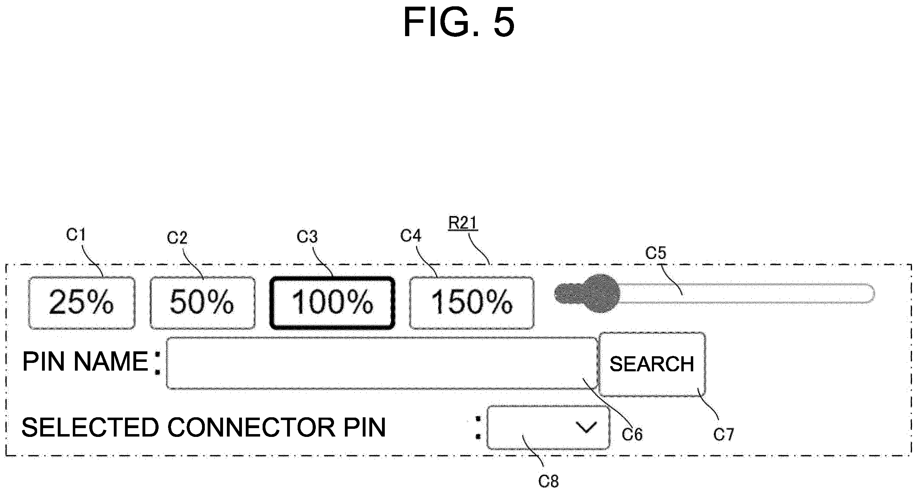

Furthermore, the second data D2 displayed in the second region R2 supports an operation such as sliding, in addition to an operation such as enlargement/reduction. To be specific, for example, by operating magnification buttons C1 to C4 (see FIG. 5) displayed in an operation region R21 or operating a magnification slider C5 (see FIG. 5), it is possible to enlarge/reduce the second data D2 in the second region R2. In addition, it is possible to slide the position of the second data D2 in the second region R2 by operating a mouse wheel or a slider on the second region R2 using an operation unit composed of a pointing device such as a mouse.

However, since the second data D2 is two-dimensionally displayed, the second data D2 does not support the rotation operation like the first data D1.

The third region R3 is a rectangular region that is long in the horizontal direction. In the third region R3, the third data D3, which is detailed data of a component such as a harness or a connector, is displayed. The third data D3 is a two-dimensional single item drawing illustrating details of a component such as a harness or a connector. As an example, in a case of a connector, a two-dimensional image indicating a product number of the connector, pin arrangement thereof, and the like is displayed as the third data D3. Herein, the third data D3 is two-dimensionally displayed in the third region R3.

In addition, the third data D3 displayed in a third region R3 does not support an operation such as enlargement/reduction, rotation, or sliding, unlike the first data D1 or the second data D2.

Further, the operation region R21 is superimposed and displayed on a part of the second region R2 (in the present embodiment, as an example, an upper right part). As illustrated in FIG. 5, the operation region R21 includes a first input field C6 and a second input field C8 in addition to the magnification buttons C1 to C4 and the magnification slider C5 for enlarging/reducing the second data D2.

The first input field C6 is a free input field for inputting a desired pin name. When a search button C7 is operated in a state where a pin name is input in the first input field C6, the pin having the pin name input in the first input field C6 is selected.

The second input field C8 is an input field for inputting a pin name in a pull-down format. By inputting a pin name input in the second input field C8, the pin having the pin name input in the second input field C8 is selected.

As described above, in the display control method according to the present embodiment, the first data D1 and the second data D2, which respectively represent circuits and are associated with each other, are displayed on the same display screen G1. The first data D1 and the second data D2 have different display modes.

Namely, as illustrated in FIG. 4, the first data D1 and the second data D2 are displayed on the same display screen G1 in a browsable manner (i.e., simultaneously on one screen). Herein, the first data D1 and the second data D2 are data each representing a circuit (electric circuit) such as a harness routed in the machine body 41 of the work vehicle 4, and are associated with each other by representing the same circuit. In the present embodiment, as an example, the first data D1 is displayed three-dimensionally, and the second data D2 is displayed two-dimensionally, whereby the first data D1 and the second data D2 are different in display mode.

Thus, for example, a worker who performs maintenance work can simultaneously see the first data D1 and the second data D2 having different display modes on one display screen G1. Therefore, the worker can visually compare the first data D1 and the second data D2 without switching the display screen, and the comparison between the two is facilitated. As a result, the display control method according to the present embodiment makes it possible to improve work efficiency of the routing work or the like using the display screen G1.

To be specific, for example, the worker who performs the maintenance work can refer to both of the first data D1 and the second data D2 displayed on the display screen G1 to specify a failure location or a location where a failure is suspected. As a result, the worker can intuitively and easily specify a failure location, a location where a failure is suspected, or the like only by viewing the same display screen G1 (without switching the display screen), and the time required for the specification is also reduced. Further, when the display screen is switched, for example, if drawings or the like of different models are erroneously displayed, this may lead to a work error. However, by displaying the first data D1 and the second data D2 on the same display screen G1, such a work error can be easily avoided.

Further, the display control method according to the present embodiment further includes displaying the third data D3 on the display screen G1. The third data D3 is data corresponding to the first data D1 and the second data D2. In the present embodiment, as an example, the first data D1 is a three-dimensional model imitating a circuit of a harness or the like routed in the machine body 41, the second data D2 is a circuit diagram (wiring diagram) illustrating the circuit of the harness or the like routed in the machine body 41, and the third data D3 is a two-dimensional single item drawing illustrating details of a component such as the harness or a connector.

Accordingly, for example, the worker who performs the maintenance work can refer to the three types of data (the first data D1, the second data D2, and the third data D3) displayed on the display screen G1. Therefore, it is possible to further improve the work efficiency of the routing work or the like using the display screen G1.

### [3.2] Display Screen Behavior

Next, behavior of the display screen G1 will be described.

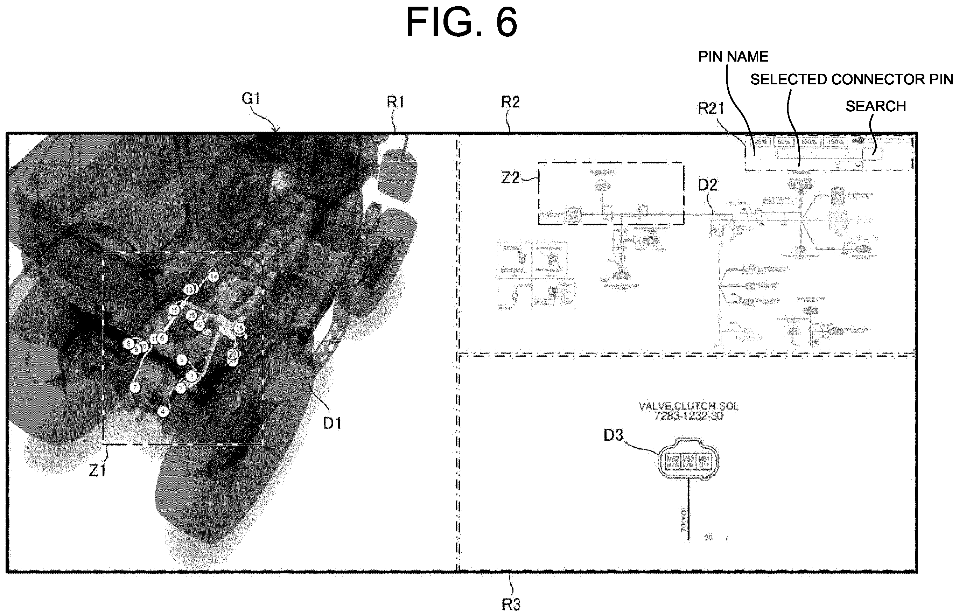

In the example of FIG. 4, components to which numbers "1" to "23" are assigned are displayed in the first data D1 of the first region R1. Here, in the first data D1 of the first region R1, as an example, when a location corresponding to the "No. 20" component (a location indicated by a symbol "P1" in FIG. 4) is selected (clicked), the content of the display screen G1 changes as illustrated in FIG. 6. That is, when an operation of selecting a selection part is performed on the display screen G1, the display screen G1 changes in response to the operation. Herein, a case where the "No. 20" component is selected as the "selection part" will be exemplified.

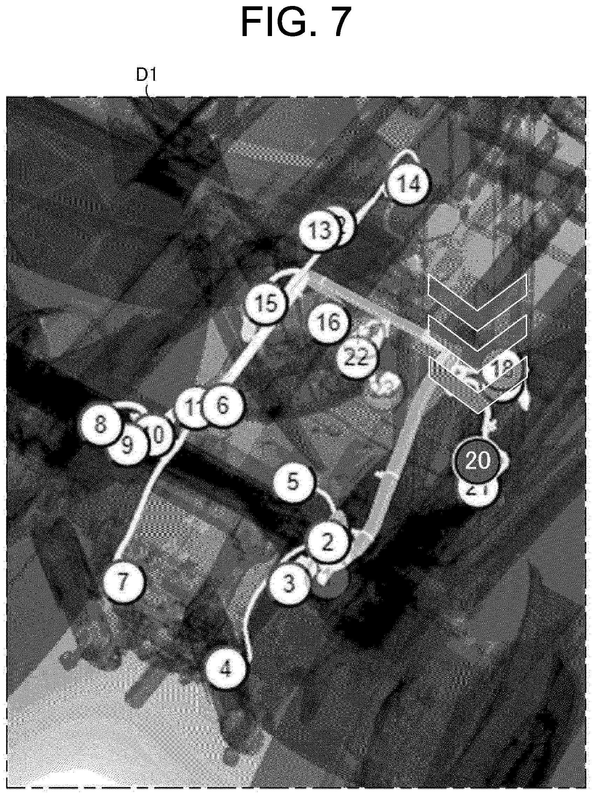

Namely, in the example of FIG. 6, the "No. 20" component (selection part) of in the first data D1 of the first region R1 is highlighted. The highlighted display is achieved by, for example, colored display, display of a mark (a surrounding frame, a cursor, or the like), enlarged display, blinking display, or the like. Herein, as an example, as illustrated in FIG. 7, the "No. 20" component (selection part) is highlighted by coloring (highlighting) and attaching a cursor (downward arrow). FIG. 7 is an enlarged view of a part (region Z1) of the first region R1 in FIG. 6. The colored (highlighted) display may be any color, but as an example, a relatively conspicuous color such as light blue, green, or yellow is preferable.

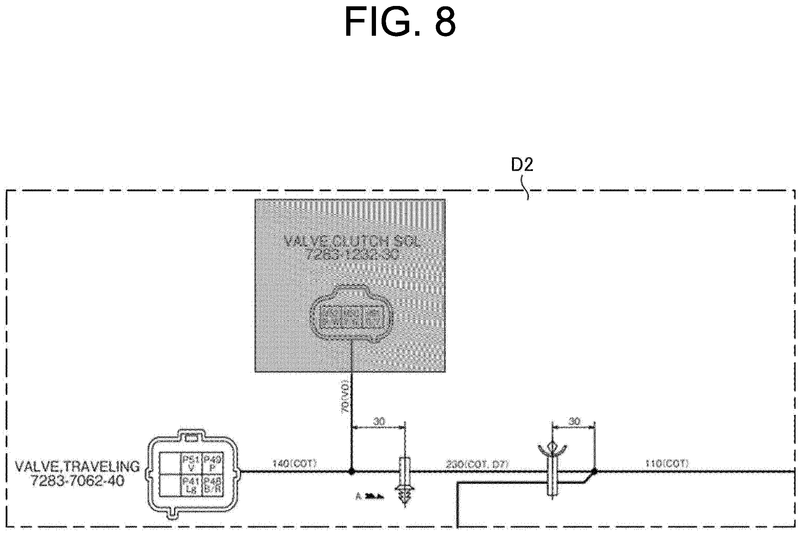

In addition, at this time, in the second region R2, a component (herein, a connector) corresponding to the "No. 20" component (selection part) in the second data D2 is highlighted. Herein, as an example, as illustrated in FIG. 8, the connector, which is the "No. 20" component (selection part), is highlighted by coloring (highlighting). FIG. 8 is an enlarged view of a part (region Z2) of the second region R2 in FIG. 6. The colored (highlighted) display may be any color, but as an example, a relatively conspicuous color such as light blue, green, or yellow is preferable.

Further, at this time, in the third region R3, the third data D3 indicating detailed information of the "No. 20" component (selection part) is displayed. As an example, when the "No. 20" component is a connector, a single item drawing illustrating the product number of the connector, pin arrangement thereof, and the like is two-dimensionally displayed in the third region R3 as the third data D3.

As described above, when an operation of selecting a selection part in the first data D1 of the first region R1 is performed on the display screen G1, the operation is reflected not only in the first data D1 but also in a part corresponding to the selection part in the second data D2 of the second region R2. Further, the operation is also reflected in the third data D3 of the third region R3. That is, the first data D1, the second data D2, and the third data D3 on the display screen G1 are linked to each other, and an operation on the first data D1 is also reflected in the second data D2 and the third data D3.

Herein, an example in which the operation on the first data D1 is reflected in the second data D2 and the third data D3 is illustrated, but an operation on the second data D2 is similarly reflected in the first data D1 and the third data D3. That is, when an operation of selecting a selection part in the second data D2 of the second region R2 is performed, the operation is reflected not only in the second data D2 but also in a part corresponding to the selection part in the first data D1 of the first region R1 and in the third data D3 of the third region R3.

In short, in the display control method according to the present embodiment, the operation of selecting the selection part performed on one of the first data D1 and the second data D2 on the display screen G1 is reflected in both the first data D1 and the second data D2. Accordingly, a user such as a worker who performs maintenance work can easily grasp a correspondence relationship between the first data D1 and the second data D2 on the display screen G1.

Further, in the display control method according to the present embodiment, the selection part is highlighted in the first data D1 and the second data D2. This makes it easy for a user such as a worker who performs maintenance work to find the selection part from both of the first data D1 and the second data D2 on the display screen G1.

In addition, the selection part can be selected in the minimum constituent unit in the first data D1 and the second data D2. That is, for example, the selection part can be selected in each component unit such as a connector. Accordingly, a user such as a worker who performs maintenance work can individually select a part of interest in each minimum constituent (component) unit on the display screen G1.

Further, in the example of FIG. 6, when any pin name is input to the first input field C6 or the second input field C8 in the operation region R21, the pin having the pin name in the second data D2 is selected as the selection part, and the path (harness) connected to the pin is also highlighted in each of the first data D1 and the second data D2. Herein, as an example, as illustrated in FIGS. 7 and 8, the path connected to the selected pin is highlighted by coloring (highlighting). The colored (highlighted) display may be any color, but as an example, a relatively conspicuous color such as green, light blue, or yellow is preferable.

The operation of selecting the pin as the selection part is not limited to the operation on the operation region R21, and may be, for example, an operation on the third data D3 displayed in the third region R3. That is, when an operation of selecting (clicking) any one of the pins is performed in the third data D3 composed of the single item drawing, it is assumed that the pin has been selected as the selection part.

In this way, the selection part can be selected in a predetermined range unit in the first data D1 and the second data D2. That is, for example, the selection part can be selected in path units. Accordingly, a user such as a worker who performs maintenance work can select a part of interest on based on the connection relationship on the display screen G1.

Incidentally, in the present embodiment, as an example, the user terminal 2 receives the first data D1, the second data D2, the related data D4, and the like from the server apparatus 1 by using a browser application using only a WEB standard function such as "Service Worker" or "indexedDB", and displays the display screen G1. When it is difficult to install new software by using the standard browser application, even a portable terminal such as a tablet terminal can be used as the user terminal 2. Further, various information terminals can be used as the user terminal 2 regardless of the operating system.

For example, by producing the data as a Web application having a cache mechanism called "Service Worker", the user terminal 2 can browse the first data D1, the second data D2, the related data D4, and the like acquired from the server apparatus 1 even in an offline state.

In short, in the present embodiment, the first data D1 and the second data D2 can be received by the user terminal 2 and stored in the storage unit (data reception accumulation unit 21) of the user terminal 2 as reception data. As a result, the user terminal 2 can display the display screen G1 by using the first data D1, the second data D2, and the related data D4 that have been already received and accumulated in the data reception accumulation unit 21 even in the "offline state" in which the user terminal 2 cannot communicate with the server apparatus 1.

Further, when distributing the first data D1, the second data D2, the related data D4, and the like, the server apparatus 1 sets an "expiration date" during which the first data, the second data, the related data, and the like can be viewed in the offline state, and distributes the expiration date together. When the expiration date has elapsed, the user terminal 2 discards the data (the first data D1, the second data D2, the related data D4, etc.) accumulated in the data reception accumulation unit 21. On the other hand, when the user terminal 2 displays the display screen G1 in an "online state" in which the user terminal 2 can communicate with the server apparatus 1, the user terminal 2 extends the expiration date. Thus, it is possible to designate the expiration date of the series of data without imposing a burden of date management on the user.

In this case, in the online state, the user terminal 2 updates the data to the latest version. Thus, the display screen G1 is prevented from being displayed by using expired data, and forcible abandonment and update of data whose reliability is lowered are achieved. Further, by being in the online state, it is also possible to prevent, for example, unauthorized users from using the data, for example, by performing user authentication or the like when the expiration date is extended.

In short, the display control method according to the present embodiment further includes performing presentation in accordance with the elapsed time after the reception data is received. The "presentation in accordance with the elapsed time" mentioned here includes, for example, a display for prompting the user to update the data, a display of the number of elapsed days after the reception data is received, and the like, in addition to the display of the display screen G1 with the expiration date as described above. According to this configuration, the display screen G1 with high reliability can be displayed.

In addition, display as a browser is not good for high-load processing. Therefore, the server apparatus 1 uses the conversion server 11 to convert the three-dimensional image file D11 or the like into the data (the first data D1, the second data D2, and the related data D4) suitable for distribution and display on the browser. As a result, the display of the display screen G1 can be achieved even in the display by the browser.

In addition, since a browser application for browsing data on the WEB is used, for example, it is possible to indicate a certain type of work vehicle 4 or a selection part thereof with a uniform resource locator (URL). Therefore, display contents of the display screen G1 can be uniquely specified by the URL, and can be shared or registered as a favorite by a plurality of the user terminals 2. That is, the browser can "share" contents being displayed, by the URL. Therefore, pointing to specific data by a unique URL prevents misunderstanding when sharing information, and achieves reliable transmission of information among a plurality of users. In addition, since favorite registration or the like can be performed by the browser, user convenience is also improved.

Hereinafter, a configuration for achieving the linkage between the first data D1 and the second data D2 in the display screen G1 as described above will be described in detail.

In the display control method according to the present embodiment, the related data D4 is used, operations on a plurality of pieces of data including the first data D1 and the second data D2 are interpreted and processed in a unified manner, and display control is performed. Namely, operations for data having different granularity, such as the first data D1 composed of the three-dimensional model and the second data D2 composed of the circuit diagram (wiring diagram), is processed in a unified manner by the association-data processing unit 24 using the related data D4, and a result thereof is reflected on the plurality of pieces of data, thereby performing a consistent behavior.

As a result, for example, the same result can be acquired regardless of whether the operation is performed on either the first data D1 or the second data D2. For example, from fragmentary information such as a component position in the machine body 41 or a wiring route that needs to be investigated, information related thereto can be browsed in synchronization with a plurality of pieces of data. As a result, the user can achieve reliable and efficient research, planning of a work plan, or the like, and, for example, can make an effective explanation to the user of the work vehicle 4.

For example, in the conversion server 11, the fourth conversion unit 114 generates the related data D4 at the same time as the generation of data for distribution (the first data D1 and the second data D2, etc.). The related data D4 assigns identification information (IDs) to branch points and ends of the circuit, and includes a correspondence relationship between an interval (also referred to as "FROM-TO") represented by a combination of two adjacent points and the identification information (IDs) of the first data D1 and the second data D2 to which the interval corresponds. In other words, the correspondence relationship between each part (component, etc.) in the first data D1 and each part (component, etc.) in the second data D2 is defined by the related data D4, and by referring to the related data D4, when part of the first data D1 is selected as a selection part, the part corresponding to the selection part in the second data D2 can be highlighted.

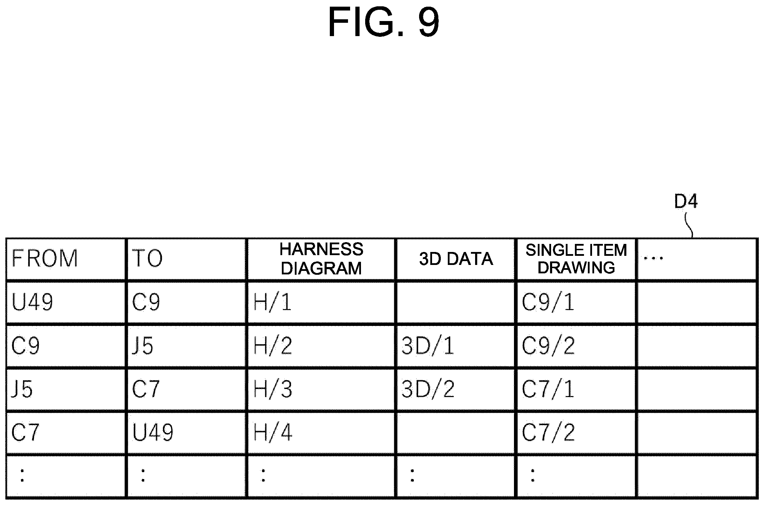

As an example, as illustrated in FIG. 9, the related data D4 is composed of a table representing the correspondence relationship between an interval (FROM-TO) represented by a combination of two points, and first data D1 (denoted as "3D data"), second data D2 (denoted as "harness diagram"), and third data D3 (denoted as "single item drawing"). In FIG. 9, "U" means an end, "C" means a connector, and "J" means a junction. In FIG. 9, for example, like the first data D1 corresponding to FROM "U49"-TO "C9", the corresponding data may not exist partially. Such related data D4 is expandable, and it is possible to relate data other than the first data D1, the second data D2, and the third data D3.

When the display screen G1 is displayed, the user terminal 2 runs as follows by using the related data D4 as illustrated in FIG. 9, for example.

Namely, for example, when an operation of selecting any one of components as a selection part is performed on the first data D1, operation information corresponding to the operation is input to the association-data processing unit 24 of the user terminal 2. The operation information is information for specifying at least the selection part, and includes, for example, identification information (ID) of the component as the selection part.

The association-data processing unit 24 specifies an interval (FROM-TO) including the operation information in the related data D4. Then, a first display processing unit 221 of the display control unit 22 extracts identification information (ID) corresponding to the specified interval with respect to the first data D1, and performs an operation such as highlighted display or display switching with respect to the first data D1 displayed in the first region R1. A second display processing unit 222 of the display control unit 22 extracts the identification information (ID) corresponding to the specified interval with respect to the second data D2, and performs an operation such as highlighted display or display switching with respect to the second data D2 displayed in the second region R2. A third display processing unit 223 of the display control unit 22 extracts the identification information (ID) corresponding to the specified interval with respect to the third data D3, and performs an operation such as display switching with respect to the third data D3 displayed in the third region R3.

Thus, for example, when a selection part different from the selection part of the first data D1 being displayed is designated in the first region R1 of the display screen G1, the display is switched and the selection part is highlighted. When a plurality of selection parts are designated, display control is simultaneously performed for the plurality of selection parts. At this time, an end (pin) included in the interval designated by the operation information is displayed as options in the second input field C8 of the operation region R21, and the end can be easily selected.

When any one of the pins (ends) is selected as the selection part by an operation on the operation region R21 or the third data D3 on the display screen G1, operation information corresponding to the operation is input to the association-data processing unit 24 of the user terminal 2. The operation information is information for specifying at least the selection part, and includes, for example, identification information (ID) of the pin (end) as the selection part.

The association-data processing unit 24 extracts, in the related data D4, all routes that start from the pin (end) included in the operation information and pass in a single stroke until the pin (end) on the opposite side is reached. The route extracted in this way is regarded as an interval (FROM-TO) for every two points in order, and the interval (FROM-TO) is specified.

Then, the first display processing unit 221 of the display control unit 22 extracts all pieces of identification information (IDs) corresponding to the specified interval with respect to the first data D1, and performs an operation such as highlighted display or display switching with respect to the first data D1 displayed in the first region R1. The second display processing unit 222 of the display control unit 22 extracts all pieces of identification information (IDs) corresponding to the specified interval with respect to the second data D2, and performs an operation such as highlighted display or display switching with respect to the second data D2 displayed in the second region R2. The third display processing unit 223 of the display control unit 22 extracts the identification information (ID) corresponding to the specified interval with respect to the third data D3, and performs an operation such as display switching with respect to the third data D3 displayed in the third region R3.

In this way, the first display processing unit 221 and the second display processing unit 222 individually perform display control of the first data D1 and the second data D2. Namely, in the present embodiment, the operation information related to the operation of selecting the selection part is output to each of the first display processing unit 221 that displays the first data D1 and the second display processing unit 222 that displays the second data D2. Then, the first display processing unit 221 reflects the operation information in the first data D1, and the second display processing unit 222 reflects the operation information in the second data D2.

In this way, since the first display processing unit 221 and the second display processing unit 222 only run in accordance with the operation information, respectively, it is easy to reduce the processing load of each of the first display processing unit 221 and the second display processing unit 222. Since all of these processes are performed by the data downloaded to the user terminal 2, communication with the server apparatus 1 is not required. Further, since the user terminal 2 dynamically calculates information necessary for display, the total amount of data can also be reduced.

Further, in the present embodiment, by using the browser application as described above, the operation information is specified by the URL. Thus, the operation contents for selecting the selection part can be easily shared by the plurality of user terminals 2, and the same display screen G1 can be displayed.

### [3.3] Display Example of Display Screen for Each Display Medium Next, a display example of the display screen G1 for each display medium will be described.

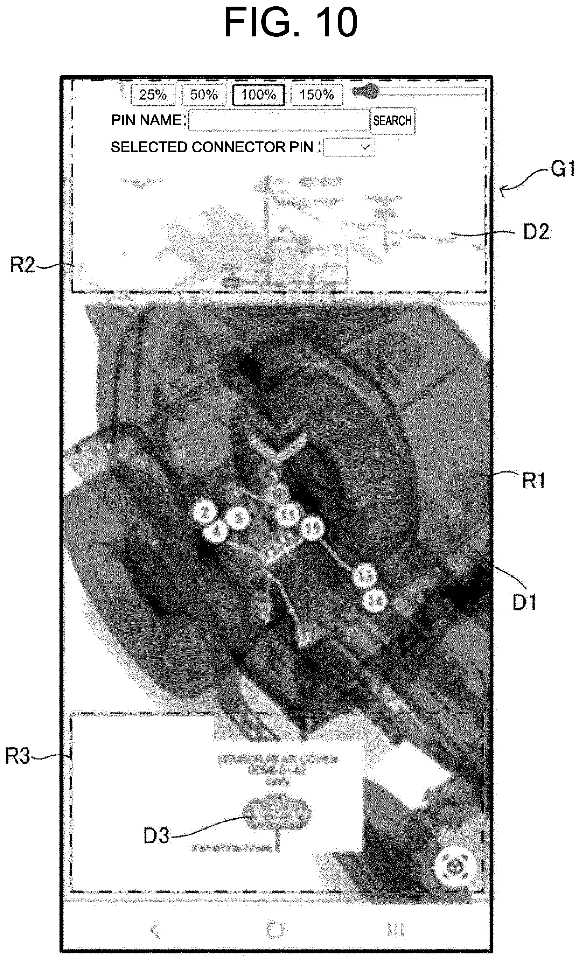

In the display control method according to the present embodiment, a layout of the first data D1 and the second data D2 in the display screen G1 is changed depending on a display medium. For example, when the display medium (user terminal 2) is a smartphone with a vertically long display unit, a display screen G1 as illustrated in FIG. 10 is displayed.

In the example of FIG. 10, since the display region is narrow, visibility is secured by displaying the second region R2 and the third region R3 so as to be superimposed on the first region R1. Herein, since the second data D2 displayed in the second region R2 and the third data D3 displayed in the third region R3 have transparency, the visibility of the first data D1 displayed in the first region R1 can also be secured.

The layout of the first data D1, the second data D2, and the like on the display screen G1 is automatically changed by the display medium (user terminal 2). Therefore, the display screen G1 can be displayed in a mode suitable for various display media, and the visibility and operability of the display screen G1 can be secured. When the user desires to concentrate on any data, it is preferable to cope with flexible display by, for example, enlarging and displaying only the data.

Further, for example, the user terminal 2 such as a smartphone with a camera may support, for example, augmented reality (AR) display in which virtual information such as the first data D1 is superimposed and displayed on the work vehicle 4 in the real space imaged by the camera.

### [3.4] Specific Example of Related Data

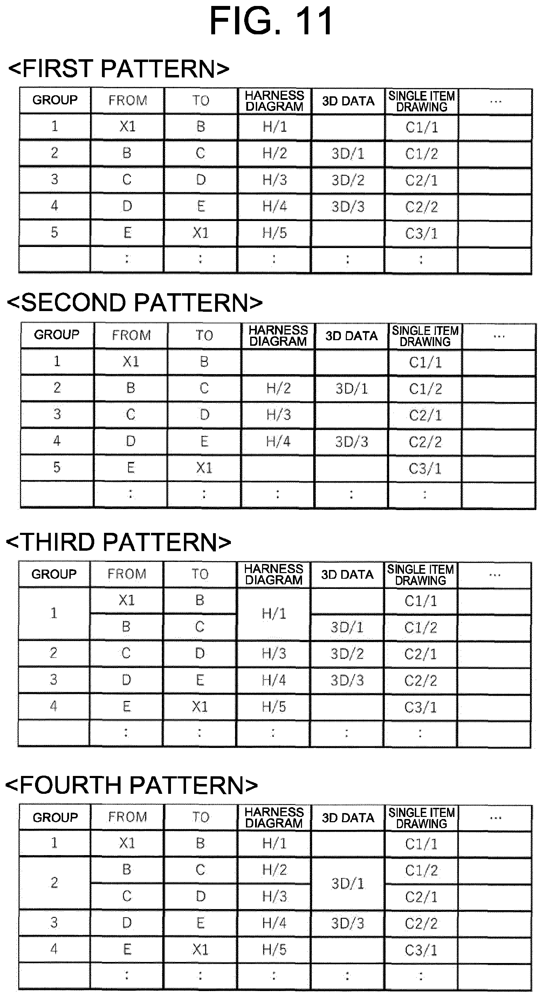

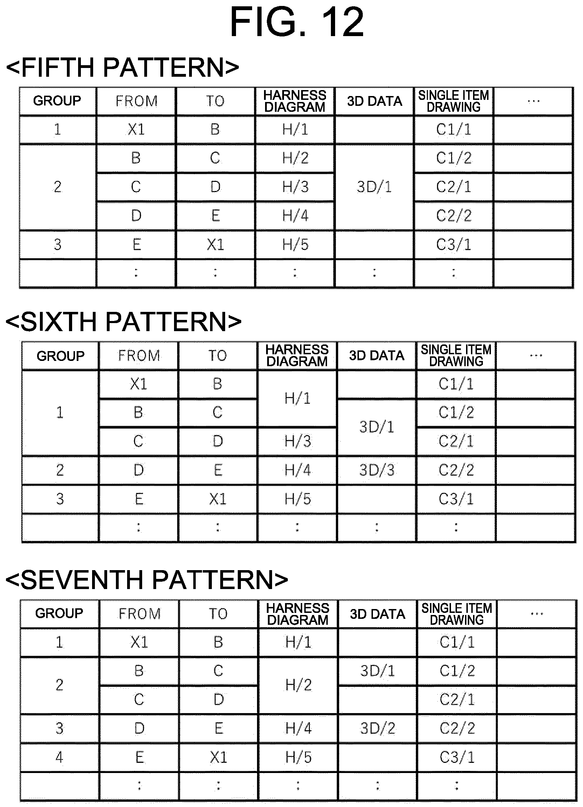

Next, a concrete example of the related data D4 will be described with reference to FIGS. 11 and 12.

In principle, there is a "one to-one" or "one to-none" relationship between an interval (FROM-TO) and a selection part such as the first data D1, in the related data D4. That is, when there is a corresponding component (minimum constitution) for the interval, "one to-one" is set, and when there is no corresponding component (minimum constitution), "one to-none" is set. For example, in "Group 1" of a first pattern in FIG. 11, the second data D2 and the third data D3 are in a "one to-one" relationship because there is a corresponding component, and the first data D1 is in a "one to-none" relationship because there is no corresponding component. Therefore, for example, when "H/3" of the second data D2 is selected as the selection part in a second pattern in FIG. 11, since there is no component corresponding to the first data D1, no part is highlighted in the first data D1.

In FIGS. 11 and 12, the front of "/" (slash) indicates a drawing number, and the rear thereof indicates an element number. For example, when it is "H/2", "H/2" indicates the second element of "H" in the harness diagram (second data D2).

When there is a "one to-none" relationship for certain data, an interval is designated by an operation of selecting a selection part for other data. For example, in the first pattern, when "3D/1" in the first data D1 is selected, an interval (FROM "B"-TO "C") is selected, and "H/2", "3D/1", and "C1/2" corresponding to the interval are distributed. In the third data D3, when "C1/2" is received, the detailed diagram of a connector "C1" is read and the second element thereof is highlighted. Therefore, the selection operation of "C1/1" can be performed in the third data D3.

In order to cope with a special case which cannot be avoided even by the above-described processing, the present embodiment allows correspondence relationships to be set across a plurality of rows in the related data D4. It is also possible to avoid the spanned portion by dividing the spanned portion for convenience and combining the divided portion with a corresponding portion in other data.

To be specific, for example, when an operation of selecting a selection part ("H/1", etc.) is performed in the first data D1 or the second data D2, processing is executed in the following procedure, and finally, selection is performed in a unit of the "group" column.

Namely, first, when a selection part is selected, an ID thereof is input to the association-data processing unit 24. The association-data processing unit 24 specifies an interval (FROM-TO) corresponding to the selection part with reference to the related data D4, and sets the interval as a determination target. The association-data processing unit 24 determines whether or not a determination target section spans across a plurality of rows in the related data D4. In a case where the determination target section spans across rows, the association-data processing unit 24 enlarges the determination target section and performs determination again.

In a case where the determination target section does not span across rows, the association-data processing unit 24 distributes the current determination target section and a selection event of the ID included in the determination target section to the first display processing unit 221, the second display processing unit 222, and the third display processing unit 223. The first display processing unit 221, the second display processing unit 222, and the third display processing unit 223 perform an operation such as highlighted display of the selection part in accordance with the selection event.

A third pattern in FIG. 11 assumes a case where a plurality of components are combined and drawn in the harness diagram (second data D2), i.e., a case where it is inappropriate to divide and select the components, and the plurality of components are divided in the three-dimensional model (first data D1). In the third pattern, there is a case where the determination target section spans across rows. That is, in the third pattern, when "3D/1" of the first data D1 is selected as the selection part, the determination target section spans across two rows included in "Group 1". Therefore, the determination target section is enlarged to FROM "X1"-TO "C", and the parts ("H/1", "3D/1", etc.) included in the section are highlighted.

A fourth pattern in FIG. 11 assumes a case where the three-dimensional model (first data D1) is not divided. In the fourth pattern, when "H/2" of the second data D2 is selected as the selection part, the determination target section spans across two rows included in "Group 2". Therefore, the determination target section is enlarged to FROM "B"-TO "D", and the parts ("H/2", "H/3", "3D/1", etc.) included in the section are highlighted.

A fifth pattern in FIG. 12 assumes a case where the number of spanning rows is larger than that in the fourth pattern. In the fifth pattern, when "H/2" of the second data D2 is selected as the selection part, the determination target section spans across three rows included in "Group 2". Therefore, the determination target section is enlarged to FROM "B"-TO "E", and the parts included in the section ("H/2", "H/3", "H/4", "3D/1", etc.) are highlighted.

A sixth pattern in FIG. 12 is a case where the third pattern and the fourth pattern are combined, and a seventh pattern is a case where the second pattern and the third pattern are combined.

As described above, in the display control method according to the present embodiment, when a selection part is selected in one of the first data D1 and the second data D2, the selection part can be enlarged and reflected in both the first data D1 and the second data D2. Thus, for example, as in the third pattern, even in a case where the way of division (way of segmentation) does not match between the harness diagram (second data D2) and the three-dimensional model (first data D1), the first data D1 and the second data D2 can be operated in conjunction with each other.

### [4] Modified Examples

Hereinafter, modified examples of the first embodiment will be listed. The modified examples, which will be described below, can be applied in combination as appropriate.

The display control system 100 according to the present disclosure includes a computer system. The computer system mainly includes one or more processors and one or more memories as hardware. When the processor executes a program stored in the memory of the computer system, the function as the display control system 100 according to the present disclosure is achieved. The program may be previously recorded in the memory of the computer system, may be provided through an electric communication line, or may be provided by being recorded in a non-transitory recording medium readable by the computer system, such as a memory card, an optical disk, or a hard disk drive. Moreover, some or all of the functional units included in the display control system 100 may be configured by an electronic circuit.

**In** addition, a configuration in which at least some of the functions of the display control system 100 is integrated in one housing is not an essential configuration of the display control system 100, and the constituent elements of the display control system 100 may be distributed and provided in a plurality of devices (for example, the server apparatus 1 and the user terminal 2). **In** contrast, in the first embodiment, the functions distributed to a plurality of devices may be integrated in one housing. Moreover, at least some of the functions of the display control system 100 may be achieved by a cloud (cloud computing) and the like.

Moreover, the user terminal 2 is not limited to a general-purpose terminal such as a tablet terminal, a smartphone, or a laptop computer, and may be configured by a dedicated terminal.

**In** the first embodiment, an example in which the display control system 100 is used for visualization of a circuit (electric circuit) using a harness or the like included in the work vehicle 4 has been described. However, the present invention is not limited thereto, and the display control system 100 can be used for visualization of various circuits. For example, the display control system 100 may be used to visualize a circuit other than an electric circuit, such as a hydraulic circuit.

### [Supplementary Note of Invention]

Hereinafter, an outline of the invention extracted from the above-described embodiment will be described in supplementary notes. Each configuration and each processing function, which will be described in the following supplementary notes, can be selected, and combined as desired.

### <Supplementary Note 1>

A display control method including
displaying, on the same display screen, first data and second data, both of which represent a circuit and are associated with each other, wherein
the first data and the second data have different display modes.

### <Supplementary Note 2>

The display control method according to supplementary note 1, further including
reflecting, on the display screen, an operation of selecting a selection part performed on one of the first data and the second data in both of the first data and the second data.

### <Supplementary Note 3>

The display control method according to supplementary note 2, wherein
the selection part is highlighted in the first data and the second data.

### <Supplementary Note 4>

The display control method according to supplementary note 2 or 3, wherein,
when the selection part is selected in one of the first data and the second data, the selection part is enlarged and reflected in both of the first data and the second data.

### <Supplementary Note 5>

The display control method according to any one of supplementary notes 2 to 4, wherein
the selection part can be selected in the minimum constituent unit in the first data and the second data.

### <Supplementary Note 6>

The display control method according to any one of supplementary notes 2 to 5, wherein
the selection part can be selected in a predetermined range unit in the first data and the second data.

### <Supplementary Note 7>

The display control method according to any one of supplementary notes 2 to 6, wherein
operation information related to an operation of selecting the selection part is output to each of a first display processing unit that displays the first data and a second display processing unit that displays the second data, the first display processing unit reflects the operation information in the first data, and the second display processing unit reflects the operation information in the second data.

### <Supplementary Note 8>

The display control method according to supplementary note 7, wherein
the operation information is specified by the URL.

### <Supplementary Note 9>

The display control method according to any one of supplementary notes 1 to 8, further including
displaying third data corresponding to the first data and the second data on the display screen.

### <Supplementary Note 10>

The display control method according to any one of supplementary notes 1 to 9, wherein
a layout of the first data and the second data in the display screen is changed by a display medium.

### <Supplementary Note 11>

The display control method according to any one of supplementary notes 1 to 10, further including
receiving the first data and the second data by a user terminal and storing the first data and the second data in a storage unit of the user terminal as reception data.

### <Supplementary Note 12>

The display control method according to supplementary note 11, further including
performing a presentation according to an elapsed time after the reception data is received.

### REFERENCE SIGNS LIST

100 Display control system
22 Display control unit
D1 First data
D2 Second data
G1 Display screen

## Claims

1. A display control method comprising
displaying, on a same display screen, first data and second data, both of which represent a circuit and are associated with each other, wherein
the first data and the second data have different display modes.

2. The display control method according to claim 1, further comprising
reflecting, on the display screen, an operation of selecting a selection part in both of the first data and the second data, the operation being performed on one of the first data and the second data.

3. The display control method according to claim 2, wherein
the selection part is highlighted in the first data and the second data.

4. The display control method according to claim 2 or 3, wherein, when the selection part is selected in one of the first data and the second data, the selection part is enlarged and reflected in both of the first data and the second data.

5. The display control method according to claim 2 or 3, wherein the selection part is selectable in the minimum constituent unit in the first data and the second data.

6. The display control method according to claim 2 or 3, wherein the selection part is selectable in a predetermined range unit in the first data and the second data.

7. The display control method according to claim 2 or 3, wherein operation information related to an operation of selecting the selection part is output to each of a first display processing unit that displays the first data and a second display processing unit that displays the second data, the first display processing unit reflects the operation information in the first data, and the second display processing unit reflects the operation information in the second data.

8. The display control method according to claim 7, wherein
the operation information is specified by a URL.

9. The display control method according to any one of claims 1 to 3, further comprising
displaying, on the display screen, third data corresponding to the first data and the second data.

10. The display control method according to any one of claims 1 to 3, wherein
a layout of the first data and the second data in the display screen is changed by a display medium.

11. The display control method according to any one of claims 1 to 3, further comprising
receiving the first data and the second data by a user terminal and storing the first data and the second data in a storage unit of the user terminal as reception data.

12. The display control method according to claim 11, further comprising
performing presentation in accordance with an elapsed time after the reception data is received.

13. A display control system comprising a display control unit that displays, on a same display screen, first data and second data, both of which represent a circuit and are associated with each other, wherein
the display control unit makes a display mode different between the first data and the second data.
